# EUROPEAN PATENT SPECIFICATION

(11) **EP 3 439 903 B1**
(45) Date of publication and mention of the grant of the patent: **04.03.2020**
(21) Application number: 17722870.7
(22) Date of filing: 03.04.2017
(51) Int. Cl.: B60J 1/16, E05B 63/14, E05B 65/08, E05B 79/20, E05B 83/40, E05B 83/44, E05C 9/00

(54) **OPENING AND CLOSING DEVICE FOR WINDOWS OF THE SLIDING TYPE FOR VEHICLES AND WINDOW COMPRISING SAID DEVICE**
ÖFFNUNGS- UND SCHLIESSVORRICHTUNG FÜR SCHIEBEFENSTER FÜR FAHRZEUGE UND FENSTER MIT SOLCH EINER VORRICHTUNG
DISPOSITIF D'OUVERTURE ET DE FERMETURE DE FENÊTRES DU TYPE COULISSANT POUR VÉHICULES, ET FENÊTRE COMPRENANT LEDIT DISPOSITIF

(30) Priority: 05.04.2016 IT UA20162304
(43) Date of publication of application: 13.02.2019
(73) Proprietor: Sguinzi Pietro S.p.A., 20083 Gaggiano (MI) (IT)
(72) Inventor: LOVATI, Stefano, 20083 Gaggiano (Milano) (IT); MOLINO, Roberto, 20083 Gaggiano (Milano) (IT)
(74) Representative: Inchingalo, Simona
(86) International application number: PCT/IB2017/051888
(87) International publication number: WO 2017/175109

(56) References cited:
- EP-A1- 2 196 341
- WO-A1-2015/014712
- US-A1- 2002 104 400
- US-A1- 2008 296 917

## Description

The present invention relates to an opening and closing device for windows of the sliding type and a window comprising said device.

The present invention finds particular application in vehicles in general and, more particularly, in vehicles fitted with sliding opening windows such as buses, small vans, caravans, trailers, snowmobiles, etc.. An example of such a window can be found in prior art document WO 2015/014712 A1.

Sliding opening windows have a first fixed panel and a second movable panel, sliding with respect to the first.

The opening device is manual and provides a movement body mounted directly on the frame of the movable panel, on which it acts directly to unlock and move the second movable panel.

The type of sliding of the second panel relative to the first may be continuous or discontinuous.

In the first case, the second panel can assume any position relative to the first fixed panel, sliding along a track that internally presents no obstacle, while in the second case, the rail has inside it a plurality of seats in which an interference element, part of the opening and closing device, is inserted to stabilize the movable portion of the window in a precise intermediate position between the fully closed and fully open positions. The sliding of the movable panel, in this latter case, is therefore intermittent.

Both types of windows have an opening and closing device which serves to unlock, at least from the fully closed position, the opening window with respect to the fixed portion.

In the case of continuous sliding, the device operates exclusively in this manner, i.e. only to unlock the movable panel from the fully closed position, and thus to release the hook that holds the movable panel constrained to the fixed panel or to the frame.

In the case of discontinuous sliding instead, intermediate positions also being possible, in which the movable panel is locked with respect to the fixed panel, the opening and closing device unlocks the movable panel from the relative intermediate position assumed with respect to the fixed panel each time.

The opening and closing devices, currently known and used on vehicles, provide a pair of vertical and opposite rods, mounted on the frame of the movable panel, designed to block the movable part of the window.

In particular, the two rods have respective first opposite ends facing one another, and second ends, opposite the first, adapted to be inserted in one of the plurality of seats present in each sliding track, placed above and below the window.

The two rods slide vertically between a first rest position, in which the two rods are at the maximum mutual distance and the second end of each rod is inserted in a seat of a respective track, to lock the window in an established open position, and an operating position, in which the rods are mutually moved one towards the other and the second end of each rod is external to a respective seat.

To open or close the window, a manoeuvring body which can be realized in the form of a knob, lever or made directly in the first end of each rod, suitably shaped to provide a recess or a gripping handle is acted on directly.

In the latter case, to open the window both first ends of each rod are gripped, moving them towards each other vertically.

This way, each rod is moved rigidly along the vertical direction, causing the disengagement of the respective second end from the seat in which it is engaged, releasing the window and allowing its movement.

In other possible configurations, the knob is turned or the lever is moved. The device comprises, in addition, at least one spring for each rod, which allows the return of the same to the rest position, when the desired opening position is reached.

The Applicant has found that this device makes for somewhat awkward movement.

The grip is not easy to hold, is not very ergonomic and obliges the user to apply a significant effort to open or close the window.

In particular, the direction of movement of the manoeuvring body usually has a single preferred direction of actuation which is more convenient to use: as a result in opening or closing the user will find himself in a more awkward situation of use.

In addition, in the case of wishing to position the window in the middle between two successive predetermined openings, the second end of each rod will rest on the upper part of the track delimiting two consecutive seats: in this position the rods remain in the working configuration conferring an unattractive appearance.

This is even more evident when the manoeuvring body is a knob bearing the logo or brand of the vehicle. In this configuration, the inscription or logo remains inevitably inclined and difficult to read.

Lastly, if from this intermediate position one wishes to restore a stable position of the window, one must again try to move the rods towards each other overcoming the resistance of the springs starting from a situation in which the rods are already at the stroke end. The lack of an idle stroke creates some difficulty in moving the window.

The need to provide an opening and closing device for windows of the sliding type that is able to remedy the aforementioned drawbacks is clear from the drawbacks described.

One purpose of the present invention, in fact, is to propose a device for opening and closing windows of the sliding type that allows a movable window of the sliding type to be moved with extreme agility and without particular effort.

Another purpose of the present invention is to provide an opening and closing device for windows of the sliding type that allows convenient use and a smooth movement of the user regardless of the direction, therefore both on opening and closing.

Another purpose of the present invention is to provide an opening and closing device for windows of the sliding type that allows the positioning of the window in an intermediate position between two consecutive predetermined positions, without the logos or captions on the manoeuvring body being inclined from the horizontal.

It is, even, a further purpose of the present invention to provide a window of the sliding type for vehicles that is easy to move.

Further advantageous characteristics are described in the appended claims.

The present invention will be clearer from the detailed description which follows, with reference to the appended drawings provided purely by way of example, in which:
Figure 1 is a perspective view of a window for vehicles of the sliding type according to the present invention;
Figure 2 is a perspective view of a detail of the window shown in Figure 1, with some parts removed in order to make others more visible, in particular it shows a device for opening and closing windows according to the present invention;
Figure 3 is an enlargement of a detail of figure 2;
Figure 4 is a partial cross-section view of the enlargement of a detail of figures 2 and 3;
Figure 5 illustrates two details of the device for opening and closing windows according to the present invention, in a first non-assembled configuration;
Figure 6 illustrates the two details of the device for opening and closing windows shown in figure 5, in a first assembled configuration;
Figures 7a, 7b and 7c illustrate three operating steps of use of the device according to the present invention.

In the appended figures, reference numeral 1 denotes a window for vehicles of the sliding type comprising an opening and closing device 2 for windows of the sliding type according to the present invention.

The window may slide either vertically or horizontally. In the description which follows explicit reference will be made to horizontal sliding, without thereby losing in generality.

Without thereby wishing to limit the invention, the window 1 is of the flush type, i.e. it lies flush with the surface of the vehicle body.

The device 2 of the present invention is, however, applicable to any window provided it is of the sliding type.

The window 1 comprises a first fixed panel 11 and a second movable panel 12, sliding with respect to the first panel 11.

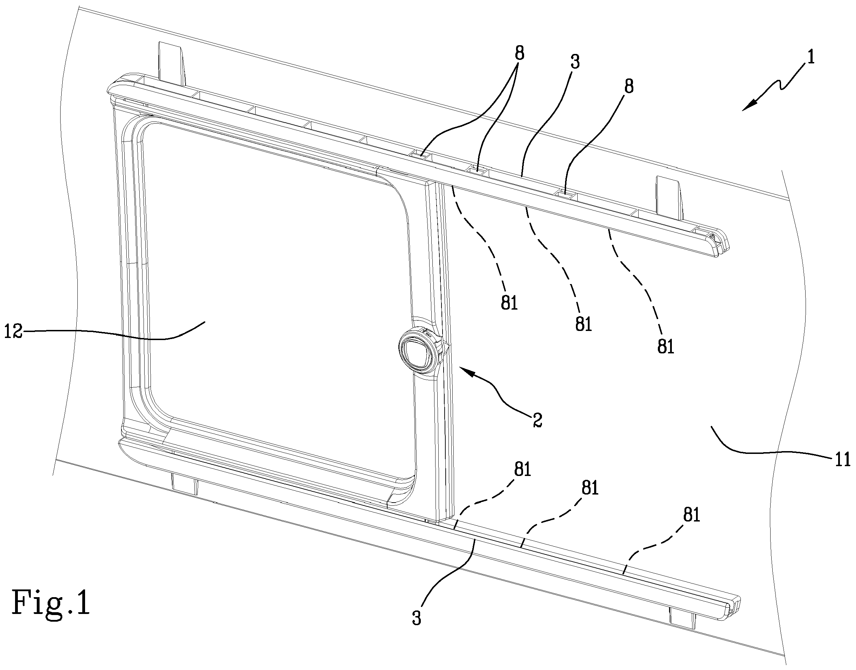

The second panel 12 slides inside respective tracks 3 placed above and below (figure 1).

Each track 3 has a plurality of seats 8 corresponding to the same number of possible relative positions that the second movable panel 12 can assume with respect to the first fixed panel 11. The extreme positions assumable by the second movable panel 12 are those of complete closure and of complete aperture of the window 1.

A frame 4 is advantageously placed around the second panel 12 and supports, along one of the two vertical sides 41, the opening and closing device 2.

The frame 4 also comprises two horizontal opposite sides 42, parallel to the tracks 3.

Specifically, the device 2 comprises a manoeuvring body 5, preferably located approximately halfway along the vertical side 41 of the frame 4 containing the device 2, and at least one interference element 6, operable by the manoeuvring body 5, placed at one end of the vertical side 41 of the frame 4.

Advantageously, there are two interference elements 6, arranged opposite, along the vertical side 41, with respect to the manoeuvring body 5.

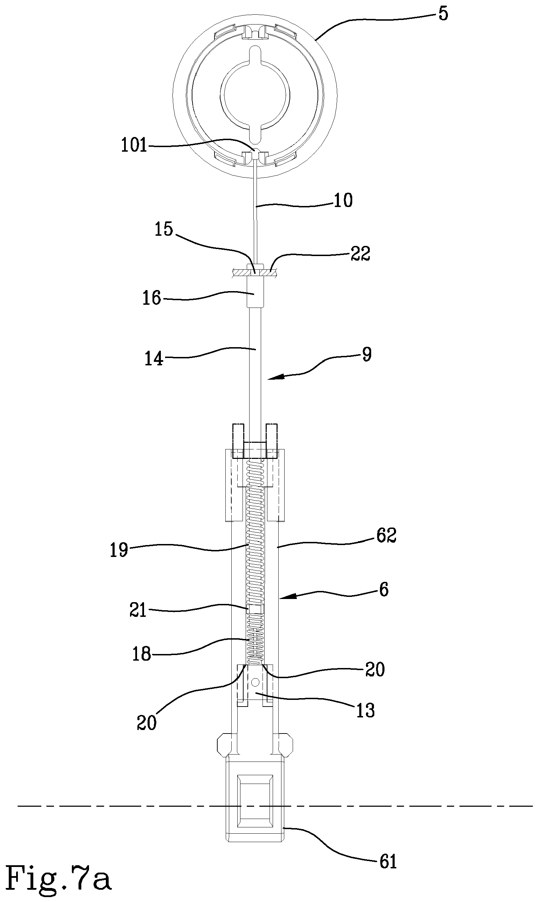

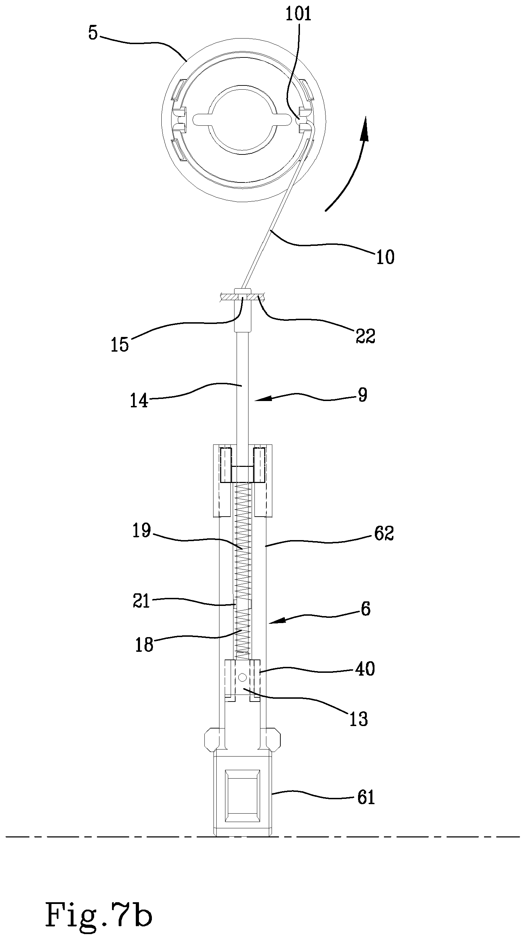

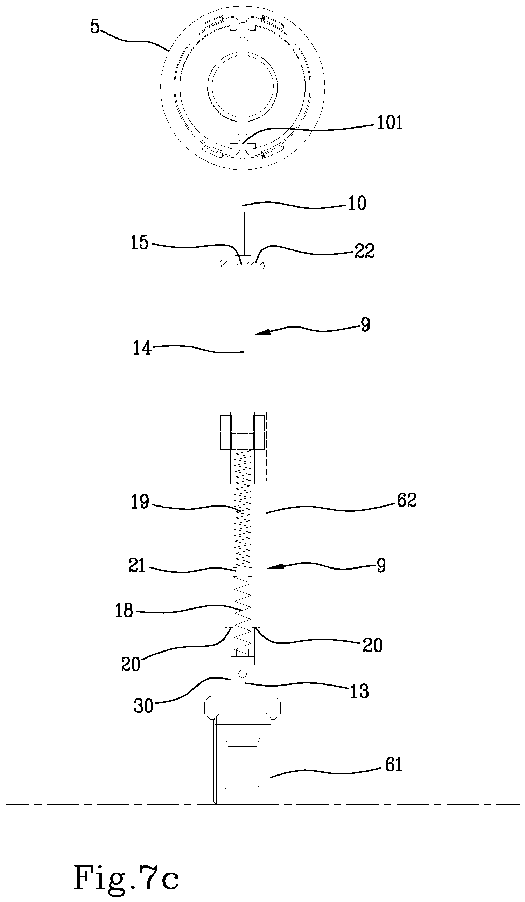

The manoeuvring body 5 may be a circular knob rotating around its own axis of symmetry 5a as shown in the appended figures, a lever hinged at one end thereof, a pair of handles sliding vertically or any other gripping system suitable to be grasped and moved. The manoeuvring body 5 is movable between an inoperative position (figures 7a and 7c) in which the second panel 12 remains stationary, and an operative position (figure 7b) in which the second panel 12 can be moved.

Each interference element 6 engages in one of the respective seats 8 placed along each track 3, to block the second movable panel 12 in a position between the completely open and the completely closed positions.

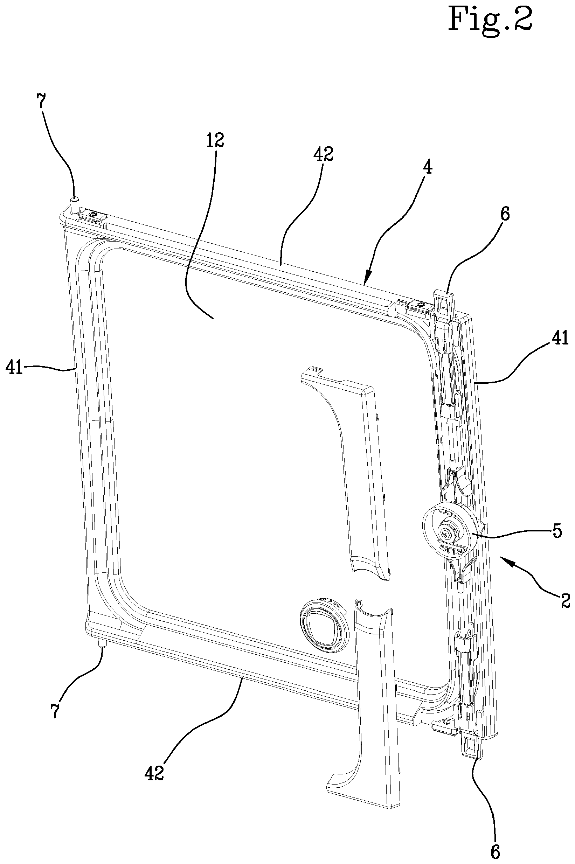

Each interference element 6 is movable between an extracted position of the window lock (figures 2, 3, 4 and 7a), in which it protrudes from the horizontal side 42 of the frame 4 and away from the manoeuvring body 5, and a retracted position unlocking the window (figures 7b or 7c), in which it does not protrude from the horizontal side of the frame 42 and is moved towards the manoeuvring body 5.

To correctly guide the second panel 12, and ensure the correct vertical alignment of the same, the horizontal sides 42 of the frame 4 have two pins 7 (figure 2), placed at the opposite end to that which the interference elements 6 protrude from.

The pins 7 slide inside the tracks 3, without interfering with the seats 8 spoken of.

Between the manoeuvring body 5 and each interference element 6 a connecting element 9 is interposed, adapted to transmit the movement from the manoeuvring body 5 to the interference element 6.

Advantageously, there are two connecting elements 9, placed on opposite sides with respect to the manoeuvring body 5. Each connecting element 9 comprises a flexible cable 10.

Each flexible cable 10 is constrained to the manoeuvring body 5, via a first end 101, to be moved from a rest position (figures 7a and 7c), in which it does not act in any way on the interference element 6, to an operative position (figure 7b) in which it acts on the interference element 6 as will be explained in more detail below.

In the rest position, the flexible cable 10 does not cause any displacement of the interference element 6, while in the operating position it drags the interference element 6 with it, moving it from the extracted position of window lock to the retracted position of window release.

In the appended drawings it can be seen that, in the rest position, the flexible cable 10 (figures 7a and 7c) is always in a straight configuration, while in the operating position (figure 7b) it is at least partially curved.

This is true if the manoeuvring body 5 is actuated with a rotation, as illustrated, by means of a circular knob or a lever that rotates around a pivot. If the manoeuvring body is a lever that slides vertically, the flexible cable 10 also remains straight in the operating position.

The flexible cable 10 can slide relatively with respect to the interference element 6 or, when engaged with the latter, drag it with it towards the manoeuvring body 5, causing the disengagement of the interference element 6 from the relative seat 8 of the track 3.

The flexible cable 10 has a second end 102, opposite the first 101, constrained to a driving block 13. The latter is slidingly associated to the interference element 6; specifically, the driving block 13 is movable, relative to the interference element 6 between a first disengagement position 30, in which it is not active on the interference element 6, and a position of engagement 40 with the interference element 6, in which it actively interferes with it, driving it with it.

The driving block 13 engages with an undercut 20, made in the interference element 6, against which it abuts, after sliding, to drag with it the interference element 6.

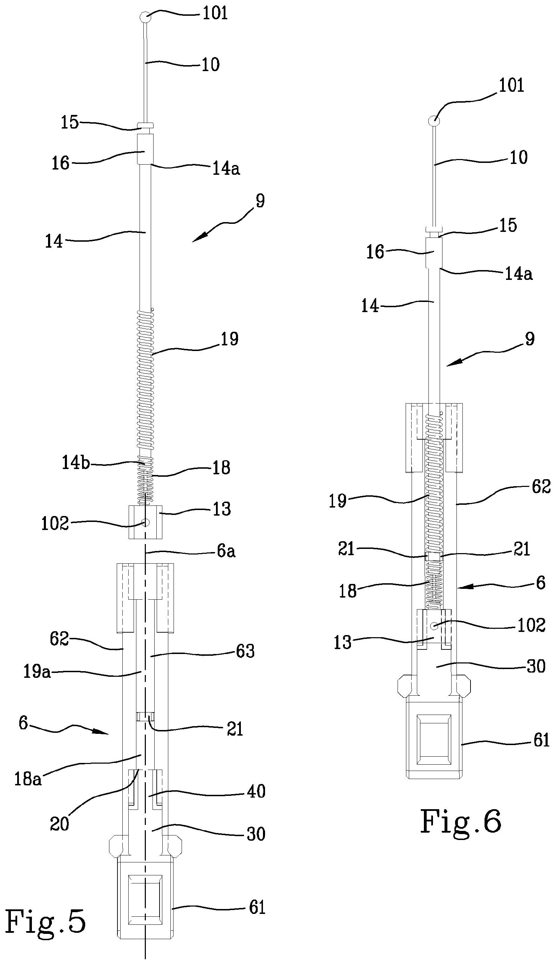

As best shown in figures 5 or 6, the interference element 6 comprises a pawl 61, which is the part of the interference element which actually engages inside one of the seats 8 of the sliding track 3, and a rod 62, rigidly connected to the pawl 61.

The rod 62 presents, along its axial extension 6a, a straight guide 63 to allow the relative sliding of the interference element 6 with respect to the connecting element 9.

The connecting element 9 also comprises a sheath 14 inside which the flexible cable 10 is slidingly inserted.

The sheath 14 remains constantly fixed in a single position, constrained to the frame 4 and housed inside the straight guide 63 of the interference element 6, which slides along and around said sheath 14.

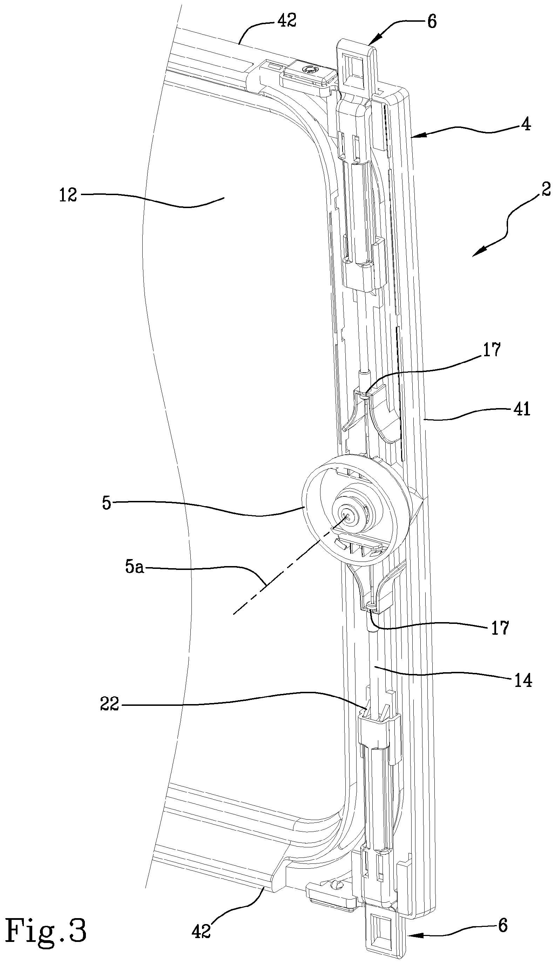

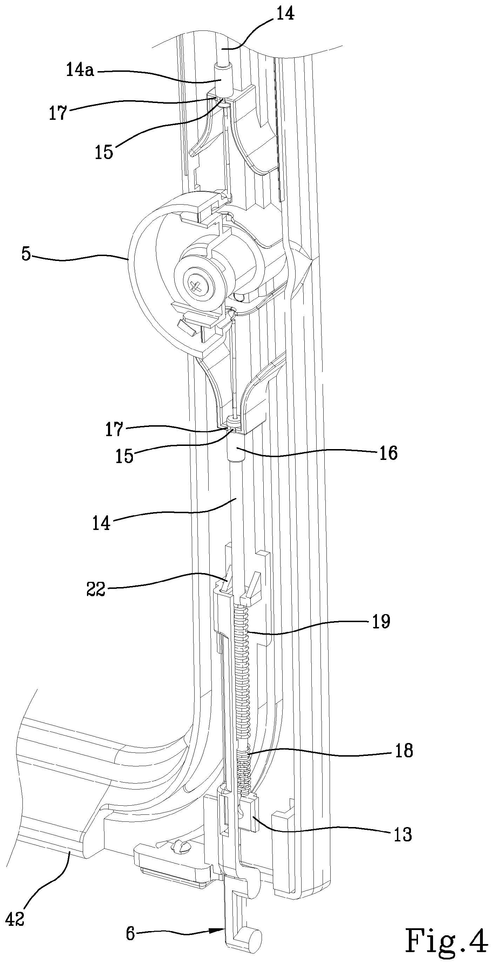

As shown in figures 5 or 6, at one end 14a of the sheath, the one facing towards the first end 101 of the flexible cable 10, there is an annular groove 15, preferably made in a cap 16 which can be fitted on the end 14a, inside which an insert 17 present on the vertical side 41 of the frame 4 (figures 3 and 4) engages. The engagement of the insert 17 inside the groove 15 forces the sheath 14 not to move during operation of the device 2.

The driving block 13 is also housed inside the guide 63 of the interference element 6, in the vicinity of the pawl 61. The shoulder 20, against which the block 13 abuts to move the interference element 6, is placed inside the guide 63, at a certain distance from the pawl 61. The block 13 is free to move inside the guide 63 between the pawl and the shoulder 20, between the first position of disengagement 30, closest to the pawl 61 and in which it does not interfere with the shoulder 20, and an engagement position 40, farther from the pawl 61, in which it actively interferes with the shoulder 20.

Advantageously, the connecting element 9 is a Bowden cable.

This makes it possible to operate the opening and closing device 2 by moving the manoeuvring body 5 and always obtain the correct functioning of the device, regardless of the direction of displacement of said manoeuvring body 5.

Each connecting element 9 further comprises at least a first elastic element 18 interposed between the sheath 14, in particular between its second end 14b, and the driving block 13.

This first elastic element 18 allows the return of the flexible cable 10 from the working position to the rest position, pushing the driving block 13 from the engagement position 40 to the disengaged position 30 towards the pawl 61. This movement is permitted when the interference element 6 straddles two consecutive seats 8, as will be explained below (figure 7c).

Each connecting element 9 further comprises at least a second elastic element 19 interposed between the interference element 6 and the sheath 14. The second elastic element 19 allows the return of the interference element 6 from the retracted unlocked position, approaching the manoeuvring body 5, to the extracted locking position, away from the manoeuvring body 5, causing it to go back inside a respective seat 8 of the track 3.

Both the elastic elements 18 and 19 are helical springs housed inside the guide 63 of the interference element 6 and separated from each other by a protrusion 21, or narrowing, of said guide 63, positioned along the axial extension 6a of the guide 63. The protrusion 21 divides the guide 63 into two distinct housings 18a and 19a, inside each of which a respective spring 18 and 19 is contained. The first 18 and the second spring 19 operate independently of each other.

The housing 18a of the first spring 18 is identified between the shoulder 20 and the protrusion 21 of the guide 63, while the housing 19a of the second spring 19 is included between the protrusion 21 and a further stop 22 projecting from the frame 4 and integral therewith.

In use, in the configuration of the window locked in a particular position, visible in figure 7a, the pawl 61 of the interference element 6 is inserted inside one of the seats 8 of the respective track 3. In this configuration, the interference element 6 is in the position of maximum distance from the manoeuvring body 5, as is the flexible cable 10 which is in the rest position. The manoeuvring body 5 is in the inoperative position.

The second spring 19 is extended, pushing the pawl 61 into the seat.

Also in this configuration, the driving block 13 is in abutment against the shoulder 20 and, consequently, the first spring 18 is compressed between the protrusion 21 of the guide 63 and said block 13.

Although exerting a thrust on the block 13, the first spring 18 is unable to move the latter from this configuration, since it is kept in position by the flexible cable 10, which, in turn, is fixed to the manoeuvring body 5 via its first end 101.

Figure 7b shows the unlocking step of the window, thus of the interference element 6. Acting on the manoeuvring body 5 to bring it into the operating position, in particular by turning the knob in one direction or another, the flexible cable 10 is pulled following the rotation or, more generally, the displacement of the latter. The flexible cable 10 drags with it the interference element 6, by means of the abutment of the driving block 13 against the shoulder 20 present in the rod 62. This way, the pawl 61 of the interference element 6 protrudes from the respective seat 8 of the track 3, releasing the second movable panel 12.

The translation of the interference element 6, towards the manoeuvring body 5, involves the compression of the second elastic element 19 between the protrusion 21 of the guide 63, which moves with the interference element, and the further stop 22 which instead remains stationary since integral with the frame 4.

As long as the manoeuvring body 5 is forced to remain in the operating position, it is possible to move the second panel 12 until it is in the desired position during opening or closing.

In one of several possible intermediate positions between the fully open and the fully closed positions, it is possible to stop the movable window 12 in such a way that the interference element 6 straddles two consecutive seats 8. In this configuration, therefore, the pawl 61 is not inserted in a seat 8 but rests on the top 81 (shown by the dashed lines in figure 1) of the track structure which delimits two consecutive seats 8. In such configuration (figure 7b), the manoeuvring body 5 may be released to achieve the return of the same to the inoperative configuration (figure 7c). This is possible also thanks to the second spring 19 which, at this point, pushes the driving block 13 away from the manoeuvring body 5.

While the interference element 6 remains stationary in support between two consecutive seats 8 in the approach position to the manoeuvring body 5, the displacement of the block 13, from the engagement position 40 to the disengaged position 30 towards the pawl 61, drags with it the flexible cable 10 which returns to the rest position, bringing the manoeuvring body 5 into the inoperative position (figure 7c). This time therefore it is the block 13 that drags behind it the flexible cable 10 and the manoeuvring body 5 bringing them into the respective inoperative positions.

In all the steps described, the sheath 14 always remains fixed constrained to the frame 4 by means of the insert 22.

If from this "intermediate" position one wishes to move the second panel 12, it is possible to again operate the manoeuvring body 5, which will act on the flexible cable 10, as described above; the latter, translating, drags the block 13 bringing it back to the engagement position 40. From here the block 13 abuts against the shoulder 20 acting on the interference element 6 and lifting it to allow the window 12 to move freely.

The invention makes it possible to achieve the purposes set forth.

In fact, the opening and closing device of the present invention makes it possible to move with extreme agility and without particular effort a movable window of the sliding type. The presence of the Bowden cable facilitates the transmission of the movement without any increase in weight or structural complications.

The movement of the manoeuvring body and, more generally of the window, is smooth and the use of the same is comfortable and ergonomic thanks to the Bowden cable which allows a correct mechanical transmission regardless of the direction of operation of the manoeuvring body.

With the device described, it is possible to stop the window also in an intermediate position between two predefined consecutive positions, while still having the manoeuvring body which repositions itself in the inoperative configuration. This allows for correct reading and viewing of any logos or lettering on the manoeuvring body itself, since the latter is tilted only when it is manoeuvred by a user, returning straight when not in use.

## Claims

1. Opening and closing device for windows of the sliding type comprising a manoeuvring body (5), at least one interference element (6), operable by said manoeuvring body (5) and movable between an extracted position locking the window, in which said interference element is away from said manoeuvring body (5), and a retracted release position of said window, in which said interference element is moved towards said manoeuvring body (5), and at least one connecting element (9) adapted to transmit the movement from said manoeuvring body (5) to said interference element (6), **characterised in that** said connecting element (9) comprises a flexible cable (10) which can slide relatively with respect to said interference element (6).

2. Device according to the preceding claim, **characterised in that** said flexible cable (10) is constrained to said manoeuvring body (5) to be moved from a rest position, in which it is not active on said interference element (6) and does not cause any displacement thereof, to an operating position, in which it is active on said interference element (6) and drags it with it by moving it from the extracted locked position to the retracted release position of said window.

3. Device according to the preceding claim **characterised in that** it comprises at least a first elastic element (18) which allows the return of said flexible cable (10) from said working position to said rest position.

4. Device according to claim 3, **characterised in that** it comprises at least one second elastic element (19) which allows the return of said interference element (6) from said retracted release position, towards said manoeuvring body (5), to said extracted locked position, away from said manoeuvring body (5).

5. Device according to one of the preceding claims, **characterised in that** said manoeuvring body (5) is connected to said interference element (6) by means of said flexible cable (10) in such a way that, regardless of the direction of operating the manoeuvring body (5), the flexible cable (10) is dragged into the operating position and, consequently, the interference element (6) is brought into the retracted release position.

6. Device according to one of the preceding claims, **characterised in that** said connecting element (9) comprises a sheath (14) inside which said flexible cable (10) is slidingly inserted; said sheath (14) remaining always fixed in one position.

7. Device according to one of the preceding claims, **characterised in that** said connecting element (9) is a Bowden cable.

8. Device according to the preceding claim, **characterised in that** said flexible cable (10) has a first end (101) engaged in said manoeuvring body (5) and a second end (102) engaged with a driving block (13) associated with said interference element (6).

9. Device according to the preceding claim, **characterised in that** said driving block (13) is slidable, relative to said interference element (6), between a first position of disengagement, in which it is not active on said interference element (6), and a position of engagement with said interference element (6), in which it actively interferes with said interference element (6) driving it with it.

10. Device according to claims 3, 6 and 8, **characterised in that** said first elastic element (18) is interposed between said sheath (14) and said driving block (13).

11. Device according to claims 4 and 6, **characterised in that** said second elastic element (19) is interposed between said interference element (6) and said sheath (14).

12. Device according to one of the preceding claims, **characterised in that** said interference element (6) comprises a pawl (61), adapted to engage inside a sliding track of a window, and a rod (62), rigidly connected to said pawl (61) having inside it a straight guide (63) to allow the relative sliding of said interference element (6) with respect to said connecting element (9).

13. Device according to claims 4 and 12, **characterised in that** the straight guide (63) has a protrusion (21) adapted to define two housings (18a, 19a) inside which said first (18) and said second (19) elastic element, independent of each other are respectively confined.

14. Window of the sliding type for vehicles, comprising a first fixed panel (11), a second movable panel (12) sliding with respect to said first panel (11), **characterised in that** it comprises at least one opening and closing device (2) of said movable panel (12) according to one or more of claims from 1 to 13.

## Patentansprüche

1. Öffnungs- und Schließvorrichtung für Schiebefenster, umfassend ein Manövriergehäuse (5), mindestens ein Interferenzelement (6), das durch das Manövriergehäuse (5) bedient werden kann und zwischen einer ausgefahrenen Position zur Verriegelung des Fensters, in der das Interferenzelement entfernt vom Manövriergehäuse (5) ist, und einer eingefahrenen Freigabeposition des Fensters, in der das Interferenzelement hinführend zum Manövriergehäuse (5) bewegt wird, bewegbar ist, und mindestens ein Verbindungselement (9), das ausgelegt ist, um die Bewegung vom Manövriergehäuse (5) zum Interferenzelement (6) zu übertragen, **dadurch gekennzeichnet, dass** das Verbindungselement (9) ein flexibles Kabel (10) umfasst, das relativ zum Interferenzelement (6) gleiten kann.

2. Vorrichtung nach dem vorhergehenden Anspruch, **dadurch gekennzeichnet, dass** das flexible Kabel (10) fest mit dem Manövriergehäuse (5) verbunden ist, um aus einer Ruheposition, in der es nicht auf das Interferenzelement (6) wirkt und dessen Verschiebung nicht bewirkt, in eine Betriebsposition bewegt zu werden, in der es auf das Interferenzelement (6) wirkt und dieses zieht, indem es es aus der ausgefahrenen verriegelten Position in die eingefahrene Freigabeposition des Fensters bewegt.

3. Vorrichtung nach dem vorhergehenden Anspruch, **dadurch gekennzeichnet, dass** sie mindestens ein erstes elastisches Element (18) umfasst, das die Rückführung des flexiblen Kabels (10) aus der Arbeitsposition in die Ruheposition erlaubt.

4. Vorrichtung nach Anspruch 3, **dadurch gekennzeichnet, dass** sie mindestens ein zweites elastisches Element (19) umfasst, dass die Rückführung des Interferenzelements (6) aus der eingefahrenen Freigabeposition hinführend zum Manövriergehäuse (5) in die ausgefahrene verriegelte Position entfernt vom Manövriergehäuse (5) erlaubt.

5. Vorrichtung nach einem der vorhergehenden Ansprüche, **dadurch gekennzeichnet, dass** das Manövriergehäuse (5) mit dem Interferenzelement (6) mittels des flexiblen Kabels (10) verbunden ist, sodass das flexible Kabel (10) ungeachtet der Betriebsrichtung des Manövriergehäuses (5) in die Betriebsposition gezogen wird und das Interferenzelement (6) entsprechend in die eingefahrene Freigabeposition gebracht wird.

6. Vorrichtung nach einem der vorhergehenden Ansprüche, **dadurch gekennzeichnet, dass** das Verbindungselement (9) eine Hülle (14) umfasst, in die das flexible Kabel (10) verschiebbar eingefügt ist, wobei die Hülle (14) stets in einer Position fixiert bleibt.

7. Vorrichtung nach einem der vorhergehenden Ansprüche, **dadurch gekennzeichnet, dass** das Verbindungselement (9) ein Bowdenzug ist.

8. Vorrichtung nach dem vorhergehenden Anspruch, **dadurch gekennzeichnet, dass** das flexible Kabel (10) ein erstes Ende (101) aufweist, das im Manövriergehäuse (5) im Eingriff ist, und ein zweites Ende (102), das mit einem Antriebsblock (13) im Eingriff ist, assoziiert mit dem Interferenzelement (6).

9. Vorrichtung nach dem vorhergehenden Anspruch, **dadurch gekennzeichnet, dass** der Antriebsblock (13) relativ zum Interferenzelement (6) zwischen einer ersten Loslöseposition, in der er auf das Interferenzelement (6) nicht wirkt, und einer Eingriffsposition mit dem Interferenzelement (6), in der er aktiv mit dem Interferenzelement (6) interferiert und dieses mit sich zieht, verschiebbar ist.

10. Vorrichtung nach Anspruch 3, 6 und 8, **dadurch gekennzeichnet, dass** das erste elastische Element (18) zwischen der Hülle (14) und dem Antriebsblock (13) eingefügt ist.

11. Vorrichtung nach Anspruch 4 und 6, **dadurch gekennzeichnet, dass** das zweite elastische Element (19) zwischen dem Interferenzelement (6) und der Hülle (14) eingefügt ist.

12. Vorrichtung nach einem der vorhergehenden Ansprüche, **dadurch gekennzeichnet, dass** das Interferenzelement (6) eine Klinke (61) umfasst, die ausgelegt ist, um in eine Schiebeführung eines Fensters einzugreifen, und eine Stange (62), die steif mit der Klinke (61) verbunden ist, aufweisend innenseitig eine gerade Führung (63), um das entsprechende Verschieben des Interferenzelements (6) gegenüber dem Verbindungselement (9) zu erlauben.

13. Vorrichtung nach Anspruch 4 und 12, **dadurch gekennzeichnet, dass** die gerade Führung (63) einen Vorsprung (21) aufweist, der ausgelegt ist, um zwei Aufnahmen (18a, 19a) zu definieren, in denen das erste (18) und das zweite (19) elastische Element jeweils unabhängig voneinander begrenzt sind.

14. Schiebefenster für Fahrzeuge, umfassend ein erstes fixes Paneel (11), ein zweites bewegbares Paneel (12), das gegenüber zum ersten Paneel (11) verschoben wird, **dadurch gekennzeichnet, dass** es mindestens eine Öffnungs- und Schließvorrichtung (2) für das bewegbare Paneel (12) nach einem oder mehreren der Ansprüche 1 bis 13 umfasst.

## Revendications

1. Dispositif d'ouverture et de fermeture de fenêtres de type coulissant comprenant un corps de manœuvre (5), au moins un élément d'interférence (6), pouvant être actionné par ledit corps de manœuvre (5) et mobile entre une position extraite de blocage de la fenêtre, dans laquelle ledit élément d'interférence est éloigné dudit corps de manœuvre (5), et une position rétractée de déblocage de ladite fenêtre, dans laquelle l'élément d'interférence est déplacé vers ledit corps de manœuvre (5), et au moins un élément de raccordement (9) adapté pour transmettre le mouvement dudit corps de manœuvre (5) au dit élément d'interférence (6), **caractérisé en ce que** ledit élément de raccordement (9) comprend un câble flexible (10) pouvant coulisser relativement par rapport au dit élément d'interférence (6).

2. Dispositif selon la revendication précédente, **caractérisé en ce que** ledit câble flexible (10) est solidaire dudit corps de manœuvre (5) pour être déplacé d'une position de repos, dans laquelle il n'est pas actif sur ledit élément d'interférence (6) et ne provoque aucun déplacement de celui-ci, à une position fonctionnelle, dans laquelle il est actif sur ledit élément d'interférence (6) et l'entraîne avec lui en le déplaçant de la position extraite de blocage à la position rétractée de déblocage de ladite fenêtre.

3. Dispositif selon la revendication précédente, **caractérisé en ce qu'**il comprend au moins un premier élément élastique (18) permettant le retour dudit câble flexible (10) de ladite position de travail à ladite position de repos.

4. Dispositif selon la revendication 3, **caractérisé en ce qu'**il comprend au moins un second élément élastique (19) permettant le retour dudit élément d'interférence (6) de ladite position rétractée de déblocage, vers ledit corps de manœuvre (5), à ladite position extraite de blocage, éloignée dudit corps de manœuvre (5).

5. Dispositif selon l'une des revendications précédentes, **caractérisé en ce que** ledit corps de manœuvre (5) est relié au dit élément d'interférence (6) au moyen dudit câble flexible (10) de manière à ce que, quelle que soit la direction d'actionnement du corps de manœuvre (5), le câble flexible (10) est entraîné dans la position d'actionnement et, par conséquent, l'élément d'interférence (6) est amené dans la position rétractée de déblocage.

6. Dispositif selon l'une des revendications précédentes, **caractérisé en ce que** ledit élément de raccordement (9) comprend une gaine (14) à l'intérieur de laquelle ledit câble flexible (10) est introduit de façon coulissante ; ladite gaine (14) restant toujours fixée dans une position.

7. Dispositif selon l'une des revendications précédentes, **caractérisé en ce que** ledit élément de raccordement (9) est un câble Bowden.

8. Dispositif selon la revendication précédente, **caractérisé en ce que** ledit câble flexible (10) comporte une première extrémité (101) se mettant en prise dans ledit corps de manœuvre (5) et une seconde extrémité (102) se mettant en prise avec un bloc d'entraînement (13) associé au dit élément d'interférence (6).

9. Dispositif selon la revendication précédente, **caractérisé en ce que** ledit bloc d'entraînement (13) peut coulisser par rapport au dit élément d'interférence (6), entre une première position de désengagement, dans laquelle il n'est pas actif sur ledit élément d'interférence (6), et une position de mise en prise avec ledit élément d'interférence (6), dans laquelle il interfère activement avec ledit élément d'interférence (6) en l'entraînant avec lui.

10. Dispositif selon les revendications 3, 6 et 8, **caractérisé en ce que** ledit premier élément élastique (18) est interposé entre ladite gaine (14) et ledit bloc d'entraînement (13).

11. Dispositif selon les revendications 4 et 6, **caractérisé en ce que** ledit second élément élastique (19) est interposé entre ledit élément d'interférence (6) et ladite gaine (14).

12. Dispositif selon l'une des revendications précédentes, **caractérisé en ce que** ledit élément d'interférence (6) comprend un cliquet (61), adapté pour se mettre en prise à l'intérieur d'un rail coulissant d'une fenêtre, et une tige (62), reliée rigidement au dit cliquet (61) comportant en son sein un guide rectiligne (63) pour permettre le coulissement relatif dudit élément d'interférence (6) par rapport au dit élément de raccordement (9).

13. Dispositif selon les revendications 4 et 12, **caractérisé en ce que** le guide rectiligne (63) comporte une saillie (21) adaptée pour définir deux logements (18a, 19a) à l'intérieur desquels ledit premier (18) et ledit second (19) élément élastique, indépendant l'un de l'autre, sont respectivement confinés.

14. Fenêtre de type coulissante pour véhicules, comprenant un premier panneau fixe (11), un second panneau mobile (12) coulissant par rapport au dit premier panneau (11), **caractérisée en ce qu'**elle comprend au moins un dispositif d'ouverture et de fermeture (2) dudit panneau mobile (12) selon l'une ou plusieurs des revendications de 1 à 13.
